# EUROPEAN PATENT SPECIFICATION

(11) **EP 2 113 667 B1**
(45) Date of publication and mention of the grant of the patent: **16.10.2013**
(21) Application number: 07831352.5
(22) Date of filing: 07.11.2007
(51) Int. Cl.: F04C 2/107, F04C 15/00, F04C 18/107

(54) **UNIAXIAL ECCENTRIC SCREW PUMP**
EXZENTERSCHNECKENPUMPE MIT EINER WELLE
POMPE À VIS EXCENTRIQUE À ARBRE UNIQUE

(30) Priority: 20.12.2006 JP 2006343187; 11.09.2007 JP 2007235008
(43) Date of publication of application: 04.11.2009
(73) Proprietor: Heishin Sobi Kabushiki Kaisha, Hyogo 652-0852 (JP)
(72) Inventor: SUHARA, Nobuhisa, Shiga 529-0261 (JP); NOMACHI, Tetsuo, Shiga 529-0261 (JP); AKAMATSU, Teruaki, Kyoto 602-0915 (JP)
(74) Representative: Witte, Weller & Partner
(86) International application number: PCT/JP2007/071621
(87) International publication number: WO 2008/075507

(56) References cited:
- EP-A1- 1 522 729
- FR-A1- 2 238 066
- FR-A1- 2 413 540
- JP-A- 05 087 059
- JP-A- 06 123 294
- JP-A- 07 501 374
- JP-A- 08 266 546
- JP-A- 11 037 155
- JP-A- 54 129 212
- JP-A- 63 302 189
- JP-A- 2005 315 188
- JP-A- 2005 315 188
- US-A- 4 397 619

## Description

### Technical Field

The present invention relates to a uniaxial eccentric screw pump which is capable of transferring various fluids, such as gases, liquids, and powder, and in which a rotor and a stator separately rotate.

### Background Art

One example of a conventional uniaxial eccentric screw pump will be explained in reference to Fig. 12 (see Patent Document 1 for example). As shown in Fig. 12, in a uniaxial eccentric screw pump 1, an external screw type rotor 2 is fittingly inserted in an inner hole 3a of an internal screw type stator 3, the rotor 2 is rotatably provided on a pump casing 6 via bearings 4, and the stator 3 is rotatably provided on the pump casing 6 via bearings 5. A driven magnet 7 is provided in an annular shape at an outer peripheral portion of the stator 3. A driving magnet 8 is provided in a substantially short cylindrical shape outside the driven magnet 7 so as to be spaced apart from the driven magnet 7 and surround the driven magnet 7. The driving magnet 8 is rotatably provided on the pump casing 6 via two bearings 9.

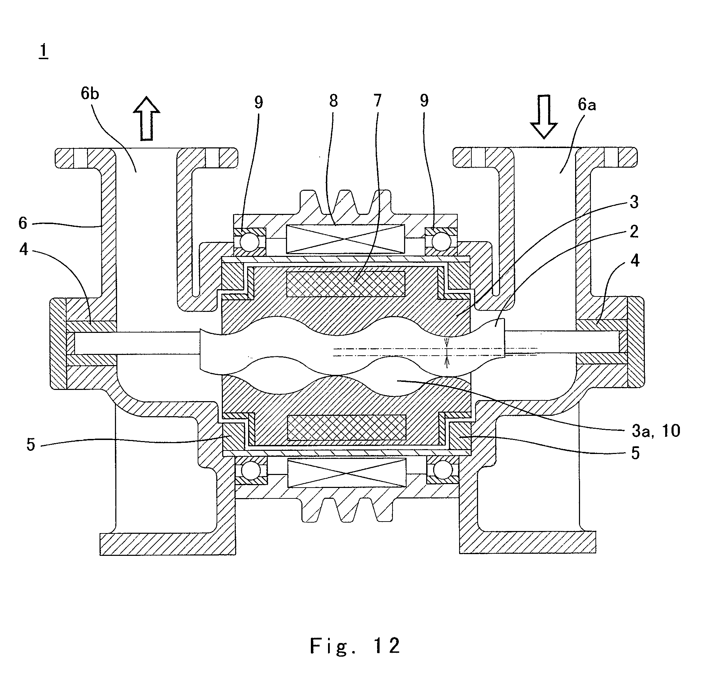

In accordance with the uniaxial eccentric screw pump 1 shown in Fig. 12, when the driving magnet 8 is rotated in a predetermined direction by an electric motor, not shown, the driven magnet 7 and the stator 3 rotate in the same direction as the driving magnet 8 according to the rotation of the driving magnet 8. When the stator 3 rotates in the predetermined direction, an inner surface forming the inner hole 3a of the stator 3 presses an outer surface of the rotor 2 in the direction of rotation of the stator 3, and this causes the rotor 2 to rotate in the same direction as the stator 3. At this time, spaces 10 formed in the stator 3 move from a suction port 6a side to a discharge port 6b side. Therefore, for example, a liquid can be suctioned from the suction port 6a, and the suctioned liquid can be discharged from the discharge port 6b.
Patent Document 1: Japanese Laid-Open Patent Application Publication SHO 63-302189
A similar axial flow apparatus with rotating helical chamber and spindle members is known from FR 2 413 540 A1.
Document FR 2 238 066 discloses the feature of the preamble of claim 1 and is considered as being the closest prior art.

### Disclosure of the Invention

### Problems to be Solved by the Invention

However, since the conventional uniaxial eccentric screw pump 1 shown in Fig. 12 is configured such that the stator 3 is rotated in the predetermined direction by the electric motor, the inner surface forming the inner hole 3a of the stator 3 presses the outer surface of the rotor 2 in the direction of rotation of the stator 3, and this causes the rotor 2 to rotate in the same direction as the stator 3, the inner surface forming the inner hole 3a of the stator 3 and the outer surface of the rotor 2 inevitably contact each other. As a result, these contact portions wear away.

Moreover, when the uniaxial eccentric screw pump 1 transfers a fluid, such as a liquid, pressure in the discharge port 6b becomes comparatively high, and the high-pressure fluid in the discharge port 6b generates a torque which becomes a resistance to the rotation of the rotor 2 in the predetermined direction. With this, contact pressure between the outer surface of the rotor 2 and the inner surface forming the inner hole 3a of the stator becomes comparatively high. As a result, an outer peripheral surface of the rotor 2 and an inner peripheral surface of the inner hole 3a of the stator further significantly wear away.

Thus, if the outer peripheral surface of the rotor 2 and the inner peripheral surface of the inner hole 3a of the stator wear away, a flow rate accuracy deteriorates, and pulsation becomes high. This shortens the life of the uniaxial eccentric screw pump 1. Further, wear powder of the rotor 2 and the stator 3 gets mixed in a transfer liquid, and causes the rotor 2 and the stator 3 to further wear away.

The reason why the flow rate accuracy deteriorates is because the volume of the space 10 formed by a contact portion (seal line) between the outer peripheral surface of the rotor 2 and the inner peripheral surface of the inner hole 3a of the stator change, and the reason why the pulsation becomes high is because the shape of the seal line changes.

The present invention was made to solve the above problems, and an object of the present invention is to provide a uniaxial eccentric screw pump capable of transferring and filling fluids while realizing high flow rate accuracy, low pulsation, and long life.

### Means for Solving the Problems

A uniaxial eccentric screw pump according to the invention recited in claim 1 is a uniaxial eccentric screw pump in which: an external screw type rotor is inserted in an inner hole of an internal screw type stator; the rotor and the stator are separately rotatably supported; and a rotation central axis of the rotor and a rotation central axis of the stator are arranged to be spaced apart from each other, wherein the rotor and the stator are separately rotated; and one or both of the rotor and the stator is rotatably supported by a magnetic noncontact bearing capable of receiving both a radial load and a thrust load.

In accordance with the uniaxial eccentric screw pump of the invention recited in claim 1, for example, the stator has a double thread internal screw type inner hole, a cross-sectional shape of the inner hole is elliptical, a cross-sectional shape of the rotor is circular, a ratio of a pitch of the rotor to a pitch of the inner hole is 1 to 2, and a ratio of a rotating speed of the rotor to a rotating speed of the stator is 2 to 1. With this, the rotor and the stator can be rotated in the same direction about their respective central axes. At this time, since spaces formed by an inner surface of the inner hole of the stator and an outer surface of the rotor move from one opening side to another opening side of the inner hole of the stator, a fluid can be transferred in this direction. Moreover, since the rotor and the stator are separately rotated, the rotor and the stator can be rotated such that the inner surface forming the inner hole of the stator and the outer surface of the rotor do not contact each other or the inner surface forming the inner hole of the stator and the outer surface of the rotor contact each other with appropriate contact pressure. With this, it is possible to prevent or suppress the rotor and the stator from wearing away.
One or both of the rotor and the stator are rotatably supported by the magnetic noncontact bearings capable of receiving both the radial load and the thrust load. Therefore, as compared to the case of using the bearings capable of receiving the radial load and the bearing capable of receiving the thrust load, it is possible to simplify the configuration and comparatively reduce the volume of the uniaxial eccentric screw pump.

In the invention recited in claim 1, the uniaxial eccentric screw pump according to the invention recited in claim 2 is configured such that: a central axis of the rotor and the rotation central axis of the rotor coincide with each other; and a central axis of the inner hole of the stator and the rotation central axis of the stator coincide with each other.

In accordance with the uniaxial eccentric screw pump of the invention recited in claim 2, since the center of gravity of the rotor can be located on the rotation central axis thereof, and the center of gravity of the stator can be located on the rotation central axis thereof, it is possible to reduce the vibration generated when the rotor and the stator rotate. Then, since the rotor and the stator rotate such that the rotor is in the inner hole of the stator and their rotation central axes coincide with their centers of gravity, respectively, it is possible to reduce the volume of the rotor and the volume of the stator.

In the invention recited in claim 1 or 2, the uniaxial eccentric screw pump according to the invention recited in claim 3 is configured such that: the rotor is rotatably supported by a driving shaft provided at one end of the rotor, and the driving shaft is rotated by a rotor driving portion; a stator driving portion is provided with respect to an outer peripheral surface of the stator, and the stator is rotated by the stator driving portion; and the stator is hermetically stored in a pump casing, and the pump casing includes a first opening communicated with one opening of the inner hole of the stator and a second opening communicated with another opening of the inner hole of the stator.

In accordance with the uniaxial eccentric screw pump of the invention recited in claim 3, the rotor driving portion can cause the rotor to rotate, and the stator driving portion can cause the stator to rotate. Then, when the rotor and the stator are rotated in a normal direction or a reverse direction at a predetermined rotating speed according to need, a fluid can be suctioned through the first opening or the second opening, and the suctioned liquid can be transferred in the stator to be discharged through the second opening or the first opening.

In the invention recited in claim 1, the uniaxial eccentric screw pump according to the invention recited in claim 4 further includes a magnetic pole type power transmission structure configured to transfer to the rotor a rotational force for causing the rotor to rotate, wherein the magnetic pole type power transmission structure includes: a driving magnetic pole portion configured to generate a plurality of driving magnetic poles; a driven magnetic pole portion configured to generate a plurality of driven magnetic poles; and a dividing wall portion configured to seal the driving magnetic pole portion and the driven magnetic pole portion, the plurality of driving magnetic poles are arranged in a circumferential direction of the driving magnetic pole portion, the plurality of driven magnetic poles are arranged in a circumferential direction of the driven magnetic pole portion, and the driven magnetic pole portion rotates according to rotation of the plurality of driving magnetic poles.

In accordance with the uniaxial eccentric screw pump of the invention recited in claim 4, when the plurality of driving magnetic poles of the driving magnetic pole portion rotate in a predetermined direction, the driven magnetic pole portion rotates in the same direction as the plurality of driving magnetic poles by the suction force and repulsive force generated between the plurality of driving magnetic poles and the plurality of driven magnetic poles. Then, the rotation of the driven magnetic pole portion is transferred to the rotor, and the rotor can be rotated in a predetermined direction. Moreover, since the dividing wall portion seals the driving magnetic pole portion and the driven magnetic pole portion, it is possible to prevent, for example, the fluid having flowed into the driven magnetic pole portion side from flowing into the driving magnetic pole portion side.

Further, since the dividing wall portion seals the driving magnetic pole portion and the driven magnetic pole portion, for example, a shaft sealing structure (such as a sealing member) for sealing the rotor driving shaft and the rotor becomes unnecessary. With this, it is possible to realize cost reduction, easy maintenance, and improvement of the durability performance of the uniaxial eccentric screw pump. In addition, it is possible to simplify disassembling, assembling, and cleaning operations.

In the invention recited in claim 4, the uniaxial eccentric screw pump according to the invention recited in claim 5 is configured such that: the plurality of driving magnetic poles and the plurality of driven magnetic poles are generated by magnets arranged such that a north pole and a south pole are alternately arranged; and the driving magnetic pole portion is rotated by the rotor driving portion.

In accordance with the uniaxial eccentric screw pump of the invention recited in claim 5, when the rotor driving portion causes the driving magnetic pole portion to rotate in a predetermined direction, the driven magnetic pole portion rotates in the same direction as the driving magnetic pole portion according to the rotation of the driving magnetic pole portion. The rotation of the driven magnetic pole portion according to the rotation of the driving magnetic pole portion is caused by the suction force and repulsive force of the magnets provided at the magnetic pole portions.

In the invention recited in claim 4, the uniaxial eccentric screw pump according to the invention recited in claim 6 is configured such that the plurality of driving magnetic poles are rotating magnetic fields generated by fixed winding wires, and the plurality of driven magnetic poles are generated by magnets arranged such that a north pole and a south pole are alternately arranged.

In accordance with the uniaxial eccentric screw pump of the invention recited in claim 6, when current is supplied to the fixed winding wire to generate the rotating magnetic field, the driven magnetic pole portion can be rotated in the same direction as the rotating magnetic field by the rotating magnetic field. The rotation of the driven magnetic pole portion by the rotating magnetic field of the driving magnetic pole is caused by the suction force and repulsive force generated between respective magnetic poles.

In the invention recited in claim 1, the uniaxial eccentric screw pump according to the invention recited in claim 7 is configured such that the rotor driving portion causes the rotor to rotate and the stator driving portion causes the stator to rotate with the rotor and the stator not contacting each other.

In accordance with the uniaxial eccentric screw pump of the invention recited in claim 7, since the rotor and the stator can be rotated with the rotor and the stator not contacting each other, the wear powder generated in a case where the rotor and the stator contact each other does not get mixed in the transfer fluid, and noise is not generated by friction between the rotor and the stator. Moreover, the dimension of the gap between the outer peripheral surface of the rotor and the inner peripheral surface of the stator can be appropriately set in accordance with the property of the transfer fluid (such as a fluid containing slurry). With this, it is possible to transfer and fill the fluid while realizing high flow rate accuracy, low pulsation, and long life in accordance with various properties of the fluid. Further, since the rotor and the stator can be rotated with the rotor and the stator not contacting each other, they can be rotated at a comparatively high speed, and a comparatively high transfer ability can be obtained.

In the invention recited in claim 1, the uniaxial eccentric screw pump according to the invention recited in claim 8 is configured such that: the stator has a double thread internal screw type inner hole or a triple thread internal screw type inner hole, and a cross-sectional shape of the inner hole is an elliptical shape or a substantially triangle shape each of whose three corners is a circular-arc shape; the rotor is a single thread external screw type or a double thread external screw type, and a cross-sectional shape of the rotor is a circular shape or a substantially oval shape; a ratio of a pitch of the rotor to a pitch of the inner hole is 1 to 2 or 2 to 3; and a ratio of a rotating speed of the rotor to a rotating speed of the stator is 2 to 1 or 3 to 2.

In accordance with the uniaxial eccentric screw pump of the invention recited in claim 8, the number of threads of the stator is two or three, and the number of threads of the rotor is one or two. Therefore, as compared to a case where the number of threads of each of the stator and the rotor is larger than the above, it is possible to simplify the shape of the rotor and the shape of the stator, and form the rotor and the stator with comparatively high size accuracy. Therefore, it is possible to provide the uniaxial eccentric screw pump which realizes low-cost and quick delivery.

In the invention recited in claim 1, the uniaxial eccentric screw pump according to the invention recited in claim 9 is configured such that the stator is made of engineering plastic, and the rotor is made of a metal.

In accordance with the uniaxial eccentric screw pump of the invention recited in claim 9, since the stator is made of engineering plastic, and the rotor is made of a metal, the change in size due to the temperature change can be comparatively suppressed as compared to the rotator and stator which are made of rubber. With this, it is possible to suppress the deterioration of the flow rate accuracy due to the temperature change.

The uniaxial eccentric screw pump may alternatively be configured such that one or both of the rotor and the stator is rotatably supported by a magnetically-levitated bearing, and one or both of the rotor and the stator is rotatably supported by a magnetic noncontact thrust bearing.

The rotor and the stator rotate in a state where one or both of the rotor and the stator levitates in the radial direction or in a state where the rotor and the stator do not contact each other in the thrust direction. Therefore, it is possible to realize low noise and low vibration, and cause the rotor and the stator to smoothly rotate. Then, for example, shaft sealing members and contact type bearings may be omitted or reduced, and maintenances thereof may also be omitted or reduced. Moreover, it is possible to improve the durability performance of the uniaxial eccentric screw pump, and simplify disassembling, assembling, and cleaning operations.
A uniaxial eccentric screw pump may alternatively be a uniaxial eccentric screw pump in which: an external screw type rotor is inserted in an inner hole of an internal screw type stator; the rotor and the stator are separately, rotatably supported; and a rotation central axis of the rotor and a rotation central axis of the stator are arranged to be spaced apart from each other, and the uniaxial eccentric screw pump includes a rotor driving portion and a stator driving portion configured to respectively cause the rotor and the stator to rotate with the rotor and the stator not contacting each other.

### Effects of the invention

Since the uniaxial eccentric screw pump according to the present invention is configured such that the rotor and the stator separately rotate, it is possible to prevent or suppress the rotating rotor and stator from wearing away by contacting each other. With this, the volume of the space formed by a close portion (close line) or a contact portion (seal line) between the outer peripheral surface of the rotor and the inner peripheral surface of the inner hole of the stator can be prevented from changing when the rotor and the stator rotate. Therefore, it is possible to realize high flow rate accuracy. Then, since the shape of the close line or the seal line does not change when the rotor and the stator rotate, the pulsation can be reduced. Therefore, it is possible to transfer and fill the fluid while realizing high flow rate accuracy, low pulsation, and long life.

### Brief Description of the Drawings

[Fig. 1] Fig. 1 is a longitudinal sectional view showing a uniaxial eccentric screw pump according to the prior art.
[Figs. 2] Figs. 2 are schematic diagrams showing the configuration of the uniaxial eccentric screw pump according to the prior art Fig. 2(a) is a diagram showing cross-sectional shapes at respective positions, and Fig. 2(b) is a side view.
[Figs. 3] Figs. 3(a) to 3(d) are schematic diagrams showing the states of the rotor and the states of the stator at respective rotation angles in the uniaxial eccentric screw pump according to the prior art.
[Figs. 4] Figs. 4(a) to 4(d) are schematic diagrams showing the states of the rotor and the states of the stator at respective rotation angles in the uniaxial eccentric screw pump according to the prior art.
[Figs. 5] Figs. 5(a) and 5(b) are schematic diagrams showing the states of the rotor and the states of the stator at respective rotation angle in the uniaxial eccentric screw pump according to the prior art.
[Fig. 6] Fig. 6 is a longitudinal sectional view showing the uniaxial eccentric screw pump according to Embodiment 2 of the present invention.
[Figs. 7] Figs. 7 show a magnetic pole type power transmission structure included in the uniaxial eccentric screw pump according to Embodiment 2 of the present invention. Fig. 7(a) is a diagram showing a driving magnetic pole portion, and Fig. 7(b) is a diagram showing a driven magnetic pole portion.
[Fig. 8] Fig. 8 is a longitudinal sectional view showing the uniaxial eccentric screw pump according to Embodiment 3 of the present invention.
[Fig. 9] Fig. 9 is a longitudinal sectional view showing the uniaxial eccentric screw pump according to Embodiment 4 of the present invention.
[Fig. 10] Fig. 10 is a longitudinal sectional view showing the uniaxial eccentric screw pump according to Embodiment 5 of the present invention.
[Fig. 11] Fig. 11 is a longitudinal sectional view showing the uniaxial eccentric screw pump according to Embodiment 6 of the present invention.
[Fig. 12] Fig. 12 is a longitudinal sectional view showing a conventional uniaxial eccentric screw pump.

### Explanation of Reference Numbers

- 11: uniaxial eccentric screw pump
- 12: rotor
- 13: stator
- 13a: inner hole
- 14: pump casing
- 15: end stud
- 16: first casing
- 17: second casing
- 18, 25, 29: bearing
- 19: stator driving portion
- 19a, 27a: rotor portion
- 19b, 27b: stator portion
- 20, 28: seal portion
- 21: first opening
- 22: second opening
- 23: central axis of inner hole
- 24: driving shaft
- 26: driving portion casing
- 27: rotor driving portion
- 30: central axis of rotor
- 31, 32, 33: reference line
- 34: space
- 35: parallel surface of inner hole
- 37, 67, 72, 74, 88: uniaxial eccentric screw pump
- 38: magnetic pole type power transmission structure
- 39: dividing wall portion
- 40: first magnetically-levitated bearing
- 41: second magnetically-levitated bearing
- 42: third magnetically-levitated bearing
- 43: fourth magnetically-levitated bearing
- 44: first magnetic noncontact thrust bearing
- 45: second magnetic noncontact thrust bearing
- 46: third magnetic noncontact thrust bearing
- 47: fourth magnetic noncontact thrust bearing
- 48: second rotor driving portion
- 49, 58, 69: driving magnetic pole portion
- 50, 57: driven magnetic pole portion
- 51, 52: space
- 53: driven magnet
- 54: driving magnet
- 55, 59: outer ring magnet portion
- 56, 60: inner ring magnet portion
- 61, 63: first magnet portion
- 62, 64, 70: second magnet portion
- 65, 68: fixed winding wire
- 71: rotor driving portion
- 75, 76, 77, 78: magnetic noncontact bearing
- 79, 80, 81, 82: outer ring magnet portion
- 83, 84, 85, 86: inner ring magnet portion

### Best Mode for Carrying Out the Invention

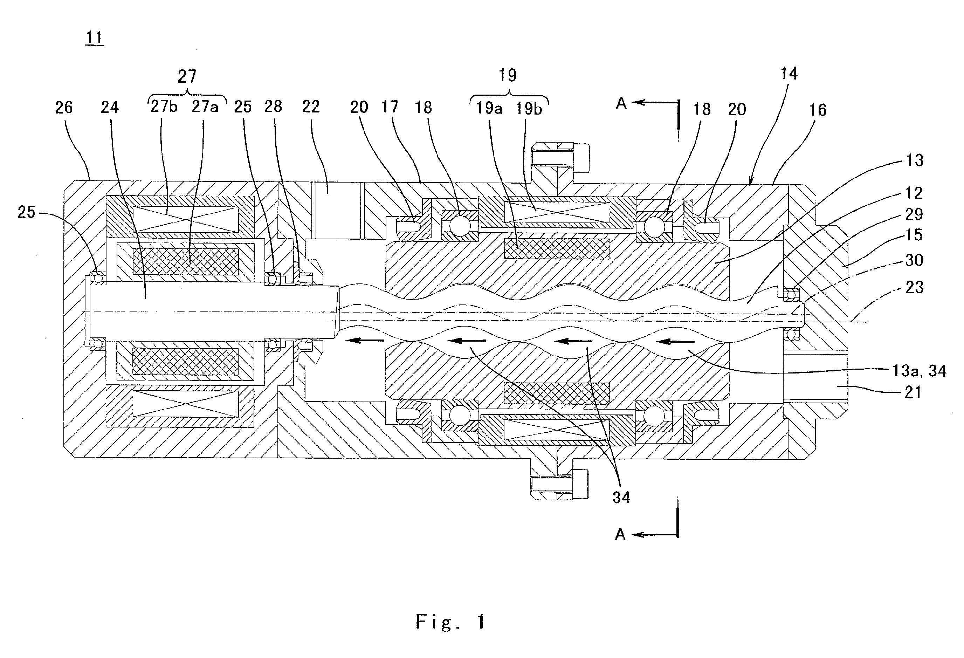

Hereinafter, Embodiment 1 of a uniaxial eccentric screw pump according to the present invention will be explained in reference to Figs. 1 to 5. As shown in Fig. 1, a uniaxial eccentric screw pump 11 can cause a rotor 12 and a stator 13 to separately rotate. Therefore, the uniaxial eccentric screw pump 11 can transfer and fill any fluid, such as low-viscosity fluids and high-viscosity fluid, while realizing high flow rate accuracy, low pulsation, and long life.

As shown in Fig. 1, the uniaxial eccentric screw pump 11 is a rotary volume type pump, and includes an internal screw type stator 13 and an external screw type rotor 12.

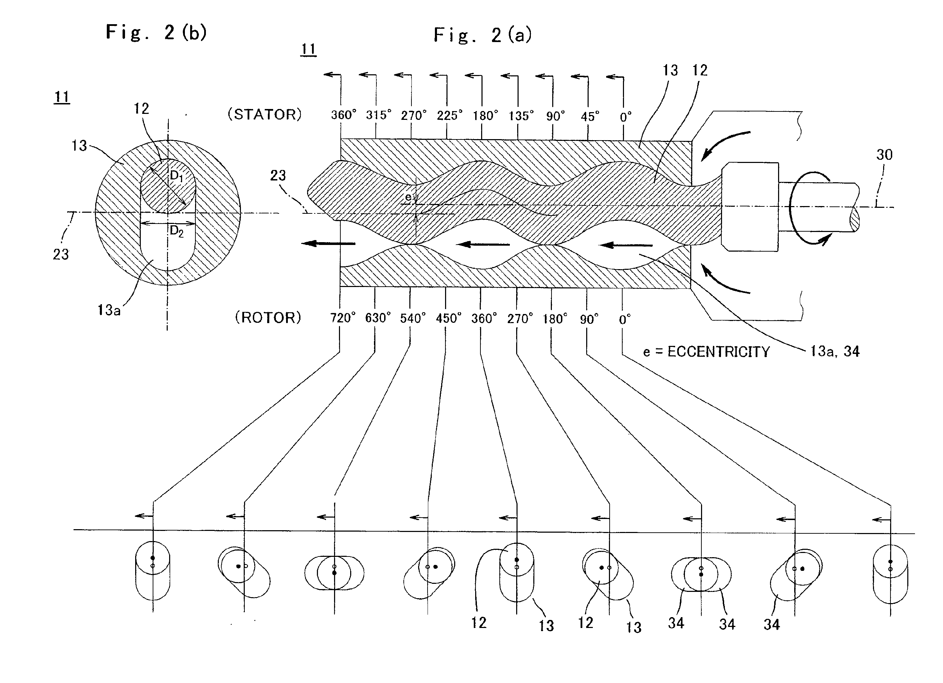

As shown in Figs. 1 and 2, the stator 13 is formed to have a substantially short cylindrical shape having a double thread internal screw type inner hole 13a for example. A longitudinal cross-sectional shape of the inner hole 13a is elliptical. The stator 13 is made of engineering plastic, such as Teflon (trademark), polyacetal, or cast nylon. The stator 13 is hermetically attached to an inside of a pump casing 14. As shown in Fig. 1, the pump casing 14 includes an end stud 15, a first casing 16, and a second casing 17 which are arranged in this order from a right tip end side. The stator 13 is rotatably provided on inner peripheral surfaces of the first and second casings 16 and 17 via two bearings 18, and a stator driving portion 19 is provided between these two bearings 18. To prevent a transfer liquid from contacting the stator driving portion 19, two seal portions 20 are attached on left and right outer sides, respectively, of the bearings 18.

As shown in Fig. 1, in the pump casing 14, a first opening 21 is formed on the end stud 15, and a second opening 22 is formed on the second casing 17. The first opening 21 can be used as a discharge port and a suction port, and the second opening 22 can be used as a suction port and a discharge port. The first opening 21 is communicated with a tip end side opening of the inner hole 13a of the stator 13, and the second opening 22 is communicated with a rear end side opening of the inner hole 13a of the stator 13.

The stator driving portion 19 is an electric motor, such as a stepping motor or a servo motor, and includes a rotor portion 19a and a stator portion 19b. As shown in Fig. 1, the rotor portion 19a is provided at an outer peripheral portion of the stator 13, and the stator portion 19b is provided at inner peripheral surfaces of the first and second casings 16 and 17. The stator driving portion 19 causes the stator 13 to rotate in a normal direction and a reverse direction for example. The stator 13 is provided such that a central axis 23 of the inner hole 13a and a rotation central axis of the stator 13 coincide with each other.

As shown in Figs. 1 and 2, the rotor 12 is formed to have a single thread external screw shape for example. A longitudinal cross-sectional shape of the rotor 12 is a substantially perfect circle. A pitch of a spiral shape of the rotor 12 is set to half a pitch of the stator 13. The rotor 12 is made of a metal, such as stainless steel, and is fittingly inserted in the inner hole 13a of the stator 13. A rear end portion of the rotor 12 is coupled to a driving shaft 24, and the driving shaft 24 is rotatably provided on an inner peripheral surface of a driving portion casing 26 via two bearings 25. A rotor driving portion 27 is provided between these two bearings 25. A seal portion 28 is attached to prevent the transfer liquid from contacting the rotor driving portion 27. Moreover, a tip end portion of the rotor 12 is rotatably supported by an inner surface of the end stud 15 via a bearing 29.

The rotor driving portion 27 is an electric motor, such as a stepping motor or a servo motor, and includes a rotor portion 27a and a stator portion 27b. As shown in Fig. 1, the rotor portion 27a is provided on an outer peripheral surface of the driving shaft 24, and the stator portion 27b is provided on an inner peripheral surface of the driving portion casing 26. The rotor driving portion 27 causes the rotor 12 coupled to the driving shaft 24 to rotate.

The rotor 12 is provided such that a central axis 30 of the rotor 12 and a rotation central axis of the rotor 12 coincide with each other. The central axis 30 of the rotor 12 and the central axis 30 of the driving shaft 24 coincide with each other. Moreover, both of the stator driving portion 19 and the rotor driving portion 27 may be the servo motors, or one of them may be the servo motor and the other one may be the stepping motor. The bearings 18 and 25 shown in Fig. 1 can support load in a radial direction and a thrust direction.

Figs. 2 are schematic diagrams showing the uniaxial eccentric screw pump 11 shown in Fig. 1, and show the states of the rotor 12 and the states of the stator 13 in cross section when the rotor 12 and the stator 13 are not moving.

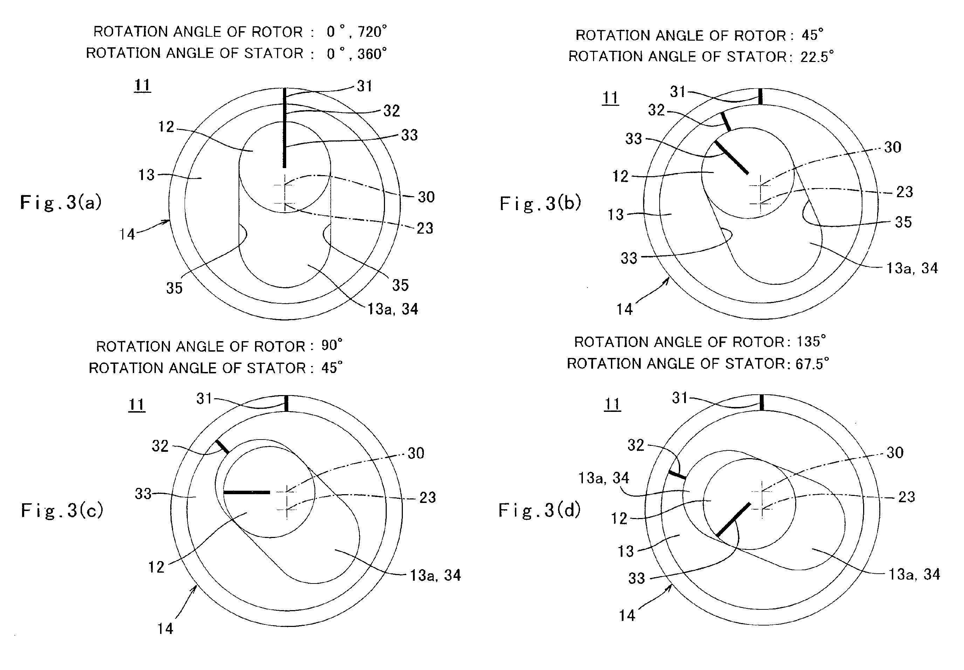

Figs. 3 to 5 are schematic diagrams showing that the rotor 12 and the stator 13 rotate in a predetermined direction (counterclockwise direction) when viewed from an A-A direction of Fig. 1. The rotor 12 is rotated in the counterclockwise direction by the rotor driving portion 27, and the stator 13 is rotated in the counterclockwise direction by the stator driving portion 19. A ratio of the rotating speed of the rotor 12 to the rotating speed of the stator 13 is 2 to 1.

In Fig. 3(a), the inner hole 13a, shown as an ellipse, of the stator 13 extends in a vertical direction. Then, the rotor 12 whose cross section is shown as a circle is located at an upper end portion of the inner hole 13a. In Fig. 3(a), reference numbers 31, 32, and 33 denote reference lines of the pump casing 14, the stator 13, and the rotor 12, respectively. In, for example, an initial state shown in Fig. 3(a), these three reference lines 31, 32, and 33 coincide with one another. A reference number 23 denotes a rotation central axis of the stator 13, and a reference number 30 denotes a rotation central axis of the rotor 12.

Figs. 3(b), 3(c), and 3(d) show that the rotor 12 and the stator 13 rotate in the counterclockwise direction about the central axes 30 and 23, respectively. The rotation angle of the rotor 12 and the rotation angle of the stator 13 are respectively 45° and 22.5° in Fig. 3(b), 90° and 45° in Fig. 3(c), and 135° and 67.5° in Fig. 3(d).

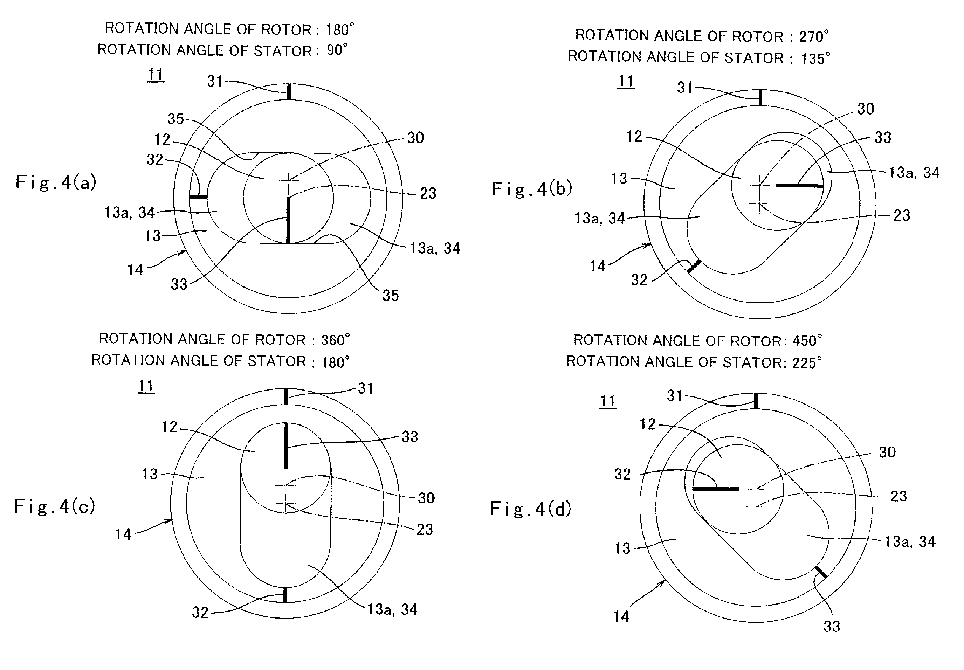

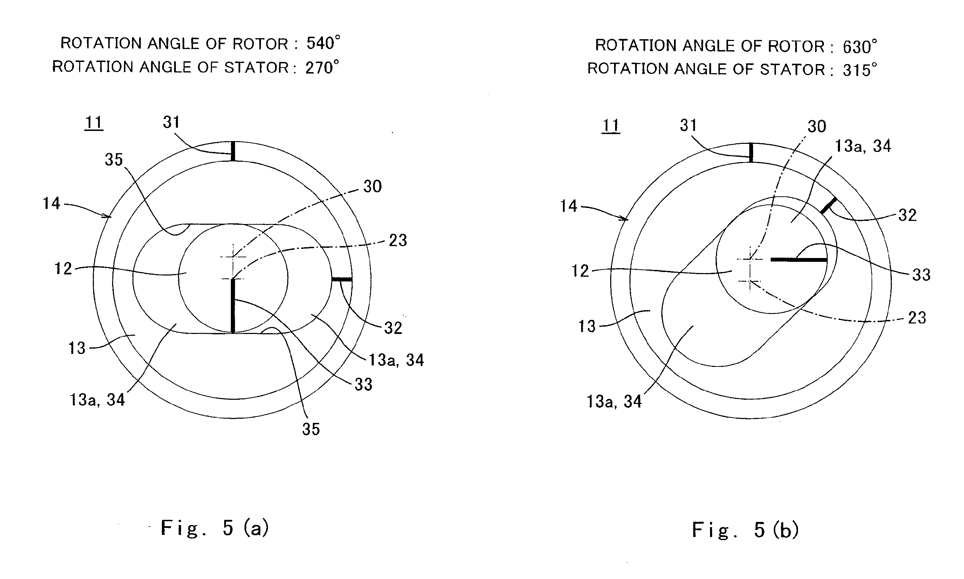

Figs. 4(a) to 4(d), 5(a), and 5(b) show that the rotor 12 and the stator 13 rotate in the counterclockwise direction about the central axes, respectively. The rotation angle of the rotor 12 and the rotation angle of the stator 13 are respectively 180° to 450° and 90° to and 225° in Figs. 4(a) to 4(d), 540" and 270° in Fig. 5(a), and 630° and 315° in Fig. 5(b). Then, as shown in Fig. 3(a), the rotation angle of the rotor 12 and the rotation angle of the stator 13 become 720° and 360°, respectively. Thus, the rotor 12 rotates twice, and the stator 13 rotates once, thereby terminating the operation of one stroke of the uniaxial eccentric screw pump 11.

As shown in Figs. 3 to 5, when the rotor 12 and the stator 13 rotate, each axial portion of the rotor 12 reciprocates along a radial direction perpendicular to the central axis 30 of the rotor 12, i.e., along a length direction of an elliptical cross section of the inner hole 13a of the stator 13. Then, as shown in Fig. 3(d) for example, spaces 34 are formed by the outer surface of the rotor 12 and the inner surface of the inner hole 13a of the stator. The spaces 34 can move from the tip end portion side (the first opening 21 side) of the rotor 12 shown in Fig. 1 to the rear end portion side (the second opening 22 side) of the rotor 12. By the movement of the spaces 34 in this direction, the fluid can be suctioned through the first opening 21 and discharged through the second opening 22 with a predetermined pressure.

A diameter D1 of the rotor 12 shown in Figs. 2(a) and 2(b) is slightly smaller than a horizontal width D2 of the inner hole 13a of the stator 13. The rotor driving portion 27 cause the rotor 12 to rotate and the stator driving portion 19 cause the stator 13 to rotate with the rotor 12 and the stator 13 not contacting each other. The rotor driving portion 27 and the stator driving portion 19 are controlled by a controller, not shown.

In accordance with the uniaxial eccentric screw pump 11 configured as shown in Figs. 1 to 5, the stator 13 has the double thread internal screw type inner hole 13a, the cross-sectional shape of the inner hole 13a is elliptical, the cross-sectional shape of the rotor 12 is circular, the ratio of the pitch of the rotor 12 to the pitch of the inner hole 13a is 1 to 2, and the ratio of the rotating speed of the rotor 12 to the rotating speed of the stator 13 is 2 to 1. With this, the rotor 12 and the stator 13 can be rotated in the same direction as each other about the predetermined central axes 30 and 23, respectively. At this time, since the spaces 34 formed by the inner surface of the inner hole 13a of the stator and the outer surface of the rotor 12 move from the first opening 21 side to the second opening 22 side, the fluid can be transferred in this direction. Moreover, since the rotor 12 and the stator 13 are separately rotated, the rotor 12 and the stator 13 can be rotated such that the inner surface forming the inner hole 13a of the stator and the outer surface of the rotor 12 do not contact each other. Therefore, it is possible to prevent the rotor 12 and the stator 13 from wearing away.

Therefore, the volume of the space 34 formed by the close portion (close line) between the outer peripheral surface of the rotor 12 and the inner peripheral surface of the inner hole 13a of the stator is prevented from changing when the rotor 12 and the stator 13 rotate. Therefore, it is possible to realize high flow rate accuracy. Then, since the shape of the close line does not change when the rotor 12 and the stator 13 rotate, the pulsation can be reduced. Therefore, the fluid can be transferred and filled while realizing high flow rate accuracy, low pulsation, and long life.

In accordance with the uniaxial eccentric screw pump 11 according to the present embodiment shown in Fig. 1, when filling the fluid of 0.01 to 0.10 ml for example, a filling accuracy of ±0.0002 ml can be realized. The filling accuracy of the conventional uniaxial eccentric screw pump is about ±0.005 ml for example.

In the uniaxial eccentric screw pump 11 shown in Fig. 1, the rotor 12 is configured such that the central axis 30 of the rotor 12 and the rotation central axis of the rotor 12 coincide with each other, and the stator 13 is configured such that the central axis 23 of the inner hole 13a of the stator 13 and the rotation central axis of the stator 13 coincide with each other.

With this, since the center of gravity of the rotor 12 can be located on the rotation central axis of the rotor 12, and the center of gravity of the stator 13 can be located on the rotation central axis of the stator 13, vibrations can be reduced when the rotor 12 and the stator 13 rotate. Then, since the rotor and the stator rotate such that the rotor is in the inner hole of the stator and their rotation central axes coincide with their centers of gravity, respectively, the volume of the rotor 12 and the volume of the stator 13 can be reduced.

Moreover, in accordance with the uniaxial eccentric screw pump 11, since the rotor 12 and the stator 13 can be rotated with the rotor 12 and the stator 13 not contacting each other, the wear powder generated in a case where the rotor 12 and the stator 13 contact each other does not get mixed in the transfer fluid, and noise is not generated by friction between the rotor 12 and the stator 13. Moreover, the dimension of the gap between the outer peripheral surface of the rotor 12 and the inner peripheral surface of the stator 13 can be appropriately set in accordance with the property of the transfer fluid (such as a fluid containing slurry). With this, it is possible to transfer and fill the fluid while realizing high flow rate accuracy, low pulsation, and long life in accordance with various properties of the fluid. Further, since the rotor 12 and the stator 13 can be rotated with the rotor 12 and the stator 13 not contacting each other, they can be rotated at a comparatively high speed, and a comparatively high transfer ability can be obtained.

Further, in accordance with the uniaxial eccentric screw pump 11, the stator 13 has the double thread internal screw type inner hole 13a, the cross-sectional shape of the inner hole 13a is elliptical, the rotor 12 is a single thread external screw type, the cross-sectional shape of the rotor 12 is circular, and the ratio of the pitch of the rotor 12 to the pitch of the inner hole 13a is 1 to 2. With this, the rotor 12 and the stator 13 are comparatively simple in shape, so that they can be formed with comparatively high size accuracy. Therefore, it is possible to provide the uniaxial eccentric screw pump 11 which realizes low cost and quick delivery.

Then, in accordance with the uniaxial eccentric screw pump 11, since the stator 13 is made of engineering plastic, such as Teflon (trademark), and the rotor 12 is made of a metal, the change in size due to the temperature change can be comparatively suppressed as compared to the rotator 12 and stator 13 which are made of rubber. With this, it is possible to suppress the deterioration of the flow rate accuracy due to the temperature change.

Moreover, in accordance with the uniaxial eccentric screw pump 11, the rotor 12 and the stator 13 can be rotated at a predetermined rotating speed according to need in the normal direction and the reverse direction. With this, the fluid can be suctioned through the first opening 21 or the second opening 22, and the suctioned liquid can be transferred in the stator 13 to be discharged through the second opening 22 or the first opening 21.

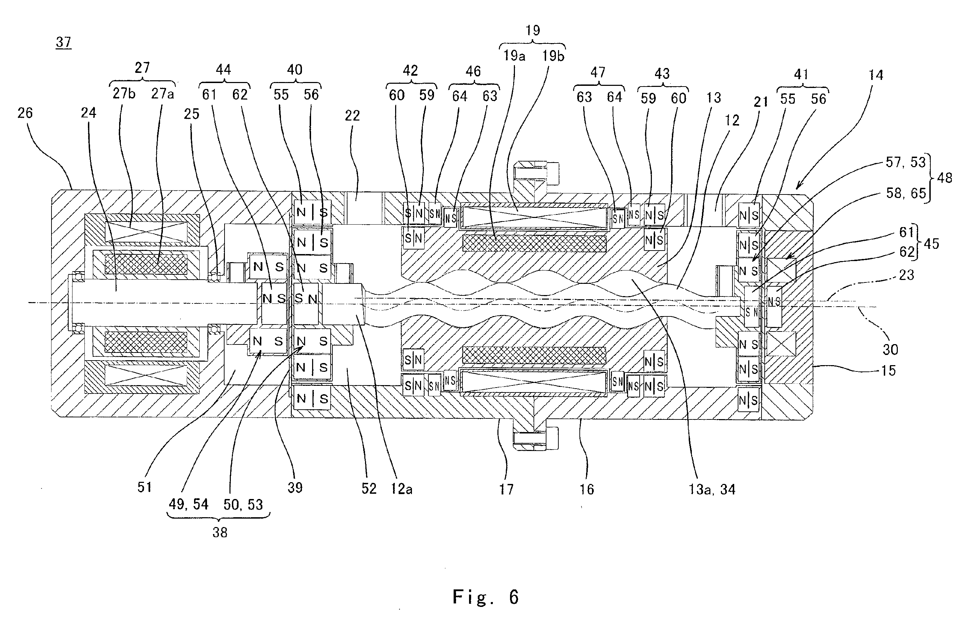

Next, a uniaxial eccentric screw pump 37 according to Embodiment 2 of the present invention will be explained in reference to the longitudinal sectional view of Fig. 6. Differences between Embodiment 2 shown in Fig. 6 and Embodiment 1 shown in Fig. 1 are as follows. As shown in Fig. 1, Embodiment 1 is configured such that: the driving shaft 24 and the rotor 12 are directly coupled to each other; and the gap between the driving shaft 24 and an inner peripheral surface of an insertion hole formed on a wall portion of the second casing 17 through which the driving shaft 24 penetrates is sealed by the seal portion 28. In contrast, as shown in Fig. 6, Embodiment 2 is configured such that: the seal portion 28 is omitted; the driving shaft 24 and a base end portion 12a of the rotor 12 are provided to be spaced apart from each other; a rotational force of the driving shaft 24 is transferred to the rotor 12 by a magnetic pole type power transmission structure 38; and the driving shaft 24 and the base end portion 12a of the rotor 12 are sealed by a dividing wall portion 39.

Moreover, the difference between Embodiment 1 and Embodiment 2 is as follows. As shown in Fig. 1, Embodiment 1 is configured such that the rotor 12 and the stator 13 are rotatably supported by the ball bearings 25, 29, and 18 of a contact type in the radial direction and the thrust direction. In contrast, as shown in Fig. 6, Embodiment 2 is configured such that the rotor 12 and the stator 13 are rotatably supported by first to fourth magnetically-levitated bearings 40, 41, 42, and 43 and first to fourth magnetic noncontact thrust bearings 44, 45, 46, and 47.

Further, the difference between Embodiment 1 and Embodiment 2 is as follows. As shown in Fig. 1, Embodiment 1 is configured such that a second rotor driving portion 48 is not provided at the tip end portion of the rotor 12. In contrast, as shown in Fig. 6, Embodiment 2 is configured such that the tip end portion of the rotor 12 is rotated by the second rotor driving portion 48 which uses the magnetic pole type power transmission structure.

Other than the above, the uniaxial eccentric screw pump 37 of Embodiment 2 is the same in configuration as the uniaxial eccentric screw pump 11 of Embodiment 1 and operates in the same manner as the uniaxial eccentric screw pump 11 of Embodiment 1, so that same reference numbers are used for the same components, and explanations thereof are omitted.

The magnetic pole type power transmission structure 38 of the uniaxial eccentric screw pump 37 of Embodiment 2 shown in Fig. 6 can transfer the rotational force of the rotor driving portion 27 to the rotor 12, and includes a driving magnetic pole portion 49, a driven magnetic pole portion 50, and the dividing wall portion 39. The driving magnetic pole portion 49 is stored in a driving side space 51 formed by the driving portion casing 26, the driven magnetic pole portion 50 is stored in a driven side space 52 formed by the second casing 17, and the dividing wall portion 39 having a plate shape is fixedly sandwiched between the driving portion casing 26 and the second casing 17. The driving side space 51 in which the driving magnetic pole portion 49 is provided and the driven side space 52 in which the driven magnetic pole portion 50 is provided are liquid-tightly sealed by the dividing wall portion 39.

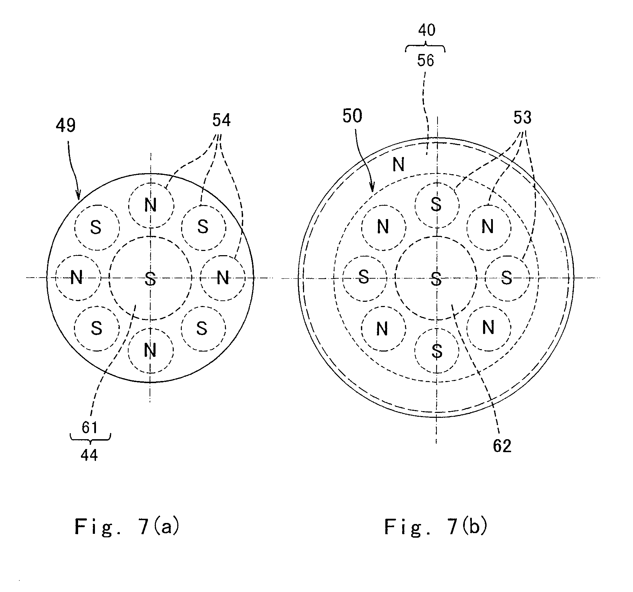

As shown in Fig. 7(b), the driven magnetic pole portion 50 has a circular plate shape, and, for example, eight driven magnets (permanent magnets for example) 53 are hermetically attached to an inside of the driven magnetic pole portion 50 along a circumferential direction of the driven magnetic pole portion 50 so as to be equally spaced apart from one another. These eight driven magnets 53 are arranged such that magnetic poles thereof, i.e., the north pole and the south pole are alternately arranged when viewed from the driving magnetic pole portion 49 shown in Fig. 6. The magnetic poles (the north poles and the south poles) of these eight driven magnets 53 are driven magnetic poles. Moreover, the base end portion 12a of the rotor 12 is coupled to a center portion of the driven magnetic pole portion 50.

As shown in Fig. 7(a), the driving magnetic pole portion 49 has the same circular plate shape as the driven magnetic pole portion 50, and, for example, eight driving magnets (permanent magnets for example) 54 are hermetically attached to the inside of the driving magnetic pole portion 49 along a circumferential direction of the driving magnetic pole portion 49 so as to be equally spaced apart from one another. These eight driving magnets 54 are arranged such that magnetic poles thereof, i.e., the north pole and the south pole are alternately arranged when viewed from the driven magnetic pole portion 50 shown in Fig. 6. The magnetic poles (the north poles and the south poles) of these eight driving magnets 54 are driving magnetic poles. Moreover, the driving shaft 24 is coupled to a center portion of the driving magnetic pole portion 49.

Moreover, the driving shaft 24 coupled to the driving magnetic pole portion 49 shown in Fig. 6 is rotated by the rotor driving portion 27, and the driven magnetic pole portion 50 is rotated by the driving magnetic pole portion 49. The driving shaft 24, the driving magnetic pole portion 49, the driven magnetic pole portion 50, and the rotor 12 are configured to be rotatable about the central axis 30. Moreover, the dividing wall portion 39 has a circular plate shape for example, and is formed by a non-magnetic material.

In accordance with the magnetic pole type power transmission structure 38 configured as above, when the driving magnetic pole portion 49 (driving shaft 24) shown in Fig. 6 is rotated by the rotor driving portion 27 in a predetermined direction, and eight driving magnetic poles (driving magnets 54) N and S arranged alternatively are rotated in a predetermined direction, the driven magnetic pole portion 50 rotates in the same direction as the driving magnetic poles by a suction force and a repulsive force generated between eight driving magnetic poles N and S arranged alternatively and eight driven magnetic poles (driven magnets 53) S and N arranged alternatively.

As above, when the driven magnetic pole portion 50 is rotated in a predetermined direction by the driving magnetic pole portion 49, the rotor 12 rotates in the same direction as the driven magnetic pole portion 50, so that, for example, the fluid can be suctioned through the first opening 21 and discharged through the second opening 22 by a constant volume.

Moreover, since the driving magnetic pole portion 49 and the driven magnetic pole portion 50 are sealed by the dividing wall portion 39, it is possible to prevent, for example, the fluid having flowed into the driven magnetic pole portion 50 side from flowing into the driving magnetic pole portion 49 side. Further, a shaft sealing structure (such as the seal portion 28 shown in Fig. 1) for sealing the driving shaft 24 and the rotor 12 becomes unnecessary. With this, it is possible to realize cost reduction, easy maintenance, and improvement of the durability performance of the uniaxial eccentric screw pump. Then, it is possible to simplify disassembling, assembling, and cleaning operations.

Next, the first to fourth magnetically-levitated bearings 40, 41, 42, and 43 and the first to fourth magnetic noncontact thrust bearings 44, 45, 46, and 47 of the rotor 12 and the stator 13 will be explained in reference to Fig. 6.

As shown in Fig. 6, the first and second magnetically-levitated bearings 40 and 41 provided for the rotor 12 support the rotor 12 by utilizing the repulsive force of magnets so as to be able to receive load in the radial direction of the rotor 12 and allow the rotor 12 to rotate at a predetermined position with the rotor 12 and the pump casing 14 not contacting each other. Each of the first and second magnetically-levitated bearings 40 and 41 includes an outer ring magnet portion (permanent magnet) 55 and an inner ring magnet portion (permanent magnet) 56.

As shown in Figs. 6 and 7(b), the inner ring magnet portion 56 of the first magnetically-levitated bearing 40 is an annular magnet, and is hermetically attached to an outer peripheral portion of the driven magnetic pole portion 50. Then, as shown in Fig. 6, the outer ring magnet portion 55 is an annular magnet, and is hermetically attached to an inner peripheral portion of the second casing 17 so as to be located outside the inner ring magnet portion 56 in the radial direction, spaced apart from the inner ring magnet portion 56, and opposed to the inner ring magnet portion 56. Then, the outer ring magnet portion 55 and the inner ring magnet portion 56 are arranged such that the magnetic poles opposed to each other in the radial direction are the same poles (N and N, or S and S).

Similarly, as shown in Fig. 6, the inner ring magnet portion 56 of the second magnetically-levitated bearing 41 is an annular magnet, and is hermetically attached to an outer peripheral portion of a driven magnetic pole portion 57 provided at the tip end portion of the rotor 12. The outer ring magnet portion 55 is an annular magnet, and is hermetically attached to an inner peripheral portion of the first casing 16 so as to be located outside the inner ring magnet portion 56 in the radial direction, spaced apart from the inner ring magnet portion 56, and opposed to the inner ring magnet portion 56. Then, the outer ring magnet portion 55 and the inner ring magnet portion 56 are arranged such that the magnetic poles opposed to each other in the radial direction are the same poles (N and N, or S and S).

As shown in Fig. 6, the third and fourth magnetically-levitated bearings 42 and 43 provided for the stator 13 support the stator 13 by utilizing the repulsive force of magnets so as to be able to receive load in the radial direction of the stator 13 and allow the stator 13 to rotate at a predetermined position with the stator 13 and the pump casing 14 not contacting each other. Each of the third and fourth magnetically-levitated bearings 42 and 43 includes an outer ring magnet portion (permanent magnet) 59 and an inner ring magnet portion (permanent magnet) 60.

As shown in Fig. 6, the inner ring magnet portion 60 of the third magnetically-levitated bearing 42 (or the fourth magnetically-levitated bearing 43) is an annular magnet, and is hermetically attached to an outer peripheral portion of a second opening 22 side (or a first opening 21 side) end portion of the stator 13. The outer ring magnet portion 59 is an annular magnet, and is hermetically attached to the inner peripheral portion of the second casing 17 (or the first casing 16) so as to be located outside the inner ring magnet portion 60 in the radial direction, spaced apart from the inner ring magnet portion 60, and opposed to the inner ring magnet portion 60. Then, the outer ring magnet portion 59 and the inner ring magnet portion 60 are arranged such that the magnetic poles opposed to each other in the radial direction are the same poles (N and N, or S and S).

As shown in Fig. 6, the first and second magnetic noncontact thrust bearings 44 and 45 provided for the rotor 12 support the rotor 12 by utilizing the repulsive force of magnets so as to be able to receive load in the thrust direction of the rotor 12 and allow the rotor 12 to rotate at a predetermined position with the rotor 12 and the pump casing 14 not contacting each other. Therefore, the repulsive forces of the first and second magnetic noncontact thrust bearings 44 and 45 are set to be balanced in the thrust direction. Each of the first and second magnetic noncontact thrust bearings 44 and 45 includes a first magnet portion (permanent magnet) 61 and a second magnet portion (permanent magnet) 62.

As shown in Figs. 6 and 7(a), the first magnet portion 61 of the first magnetic noncontact thrust bearing 44 is a short columnar magnet, and is hermetically attached to a center position (on the central axis 30) of the driving magnetic pole portion 49. The second magnet portion 62 is a short columnar magnet, and is hermetically attached to a center position (on the central axis 30) of the driven magnetic pole portion 50. Then, the first magnet portion 61 and the second magnet portion 62 are arranged to be spaced apart from each other in the thrust direction (direction along the central axis 30) such that the magnetic poles opposed to each other are the same poles (S and S, or N and N).

Similarly, as shown in Fig. 6, the first magnet portion 61 of the second magnetic noncontact thrust bearing 45 is a short columnar magnet, and is hermetically attached to a center position (on the central axis 30) of the driven magnetic pole portion 57 provided at the tip end portion of the rotor 12. The second magnet portion 62 is a short columnar magnet, and is hermetically attached to a center position (on the central axis 30) of the end stud 15. Then, the first magnet portion 61 and the second magnet portion 62 are arranged to be spaced apart from each other in the thrust direction (direction along the central axis 30) such that the magnetic poles opposed to each other are the same poles (N and N, or S and S).

As shown in Fig. 6, the third and fourth magnetic noncontact thrust bearings 46 and 47 provided for the stator 13 support the stator 13 by utilizing the repulsive force of magnets so as to be able to receive load in the thrust direction of the stator 13 and allow the stator 13 to rotate at a predetermined position with the stator 13 and the pump casing 14 not contacting each other. Therefore, the repulsive forces of the third and fourth magnetic noncontact thrust bearings 46 and 47 are set to be balanced in the thrust direction. Each of the third and fourth magnetic noncontact thrust bearings 46 and 47 includes a first magnet portion (permanent magnet) 63 and a second magnet portion (permanent magnet) 64.

As shown in Fig. 6, the first magnet portion 63 of the third magnetic noncontact thrust bearing 46 (or the fourth magnetic noncontact thrust bearing 47) is an annular magnet, and is hermetically attached to the outer peripheral portion of the second opening 22 side (or the first opening 21 side) end portion on of the stator 13. The second magnet portion 64 is an annular magnet, and is hermetically attached to the inner peripheral portion of the second casing 17 (or the first casing 16) so as to be spaced apart from the first magnet portion 63 and opposed to the first magnet portion 63 in the thrust direction (direction along the central axis 23) of the first magnet portion 63. Then, the first magnet portion 63 and the second magnet portion 64 are arranged such that the magnetic poles opposed to each other in the thrust direction are the same poles (N and N, or S and S).

In accordance with the first to fourth magnetically-levitated bearings 40, 41, 42, and 43 and the first to fourth magnetic noncontact thrust bearings 44, 45, 46, and 47 of the rotor 12 and the stator 13 configured as above as shown in Fig. 6, both the rotor 12 and the stator 13 that are rotating portions levitate with respect to the pump casing 14 and the driving portion casing 26 that are fixing portions, and rotate with the rotor 12 and the stator 13 not contacting each other. Therefore, it is possible to realize low noise and low vibration, and cause the rotor 12 and the stator 13 to smoothly rotate. Then, for example, contact type bearings and bearing sealing members become unnecessary, and maintenances thereof are also unnecessary. Then, it is possible to improve the durability performance of the uniaxial eccentric screw pump 37 and simplify disassembling, assembling, and cleaning operations.

Next, the second rotor driving portion 48 using the magnetic pole type power transmission structure for causing the tip end portion of the rotor 12 to rotate will be explained in reference to Fig. 6. The second rotor driving portion 48 rotates in synchronization with the rotor driving portion 27 to cause the rotor 12 to rotate, and includes the driven magnetic pole portion 57 and a driving magnetic pole portion 58.

The driven magnetic pole portion 57 is the same as the driven magnetic pole portion 50 shown in Fig. 7(b), has a circular plate shape, and, for example, eight driven magnets (permanent magnets for example) 53 are hermetically attached to an inside of the magnetic pole portion 57 along a circumferential direction of the magnetic pole portion 57 so as to be equally spaced apart from one another. These eight driven magnets 53 are arranged such that magnetic poles thereof, i.e., the north pole and the south pole are alternately arranged when viewed from the driving magnetic pole portion 58 of the second rotor driving portion 48 shown in Fig. 6. The magnetic poles (the north poles and the south poles) of these eight driven magnets 53 are driven magnetic poles. Moreover, the tip end portion of the rotor 12 is coupled to a center portion of the driven magnetic pole portion 57.

Moreover, the driving magnetic pole portion 58 shown in Fig. 6 is configured such that: a plurality of fixed winding wires 65, such as eight fixed winding wires 65, are fixedly provided on the end stud 15; these eight fixed winding wires 65 generate rotating magnetic fields N and S arranged alternatively; and the driven magnetic pole portion 57 and the rotor 12 are rotated in the same direction as the rotating magnetic fields by the rotating magnetic fields. These eight fixed winding wires 65 are arranged to correspond to the eight driven magnets 53, respectively, of the driven magnetic pole portion 57. Moreover, an iron core is attached to each of the eight fixed winding wires 65.

In accordance with the second rotor driving portion 48, when current is supplied from a known power supply (not shown) to the eight fixed winding wires 65 shown in Fig. 6 to generate the rotating magnetic fields of the south pole and the north pole, the driven magnetic pole portion 57 is rotated in the same direction as the rotating magnetic fields by the rotating magnetic fields. The rotation of the driven magnetic pole portion 57 by the rotating magnetic fields generated by the fixed winding wires 65 is caused by the suction force and repulsive force between respective magnetic poles. Thus, the second rotor driving portion 48 can rotate in synchronization with the rotor driving portion 27 to cause the rotor 12 to rotate with a predetermined torque.

As a method for starting the driven magnetic pole portion 57, there are various known methods. For example, first, the driven magnetic poles (N, S) of the driven magnetic pole portion 57 are detected with the driven magnetic pole portion 57 not rotating. Then, in order to cause the driven magnetic pole portion 57 to rotate in a desired rotational direction, the rotating magnetic fields may be generated such that appropriate magnetic poles are generated at the fixed winding wires 65 of the driving magnetic pole portion 58. As another method for starting the driven magnetic pole portion 57, a start winding wire may be provided.

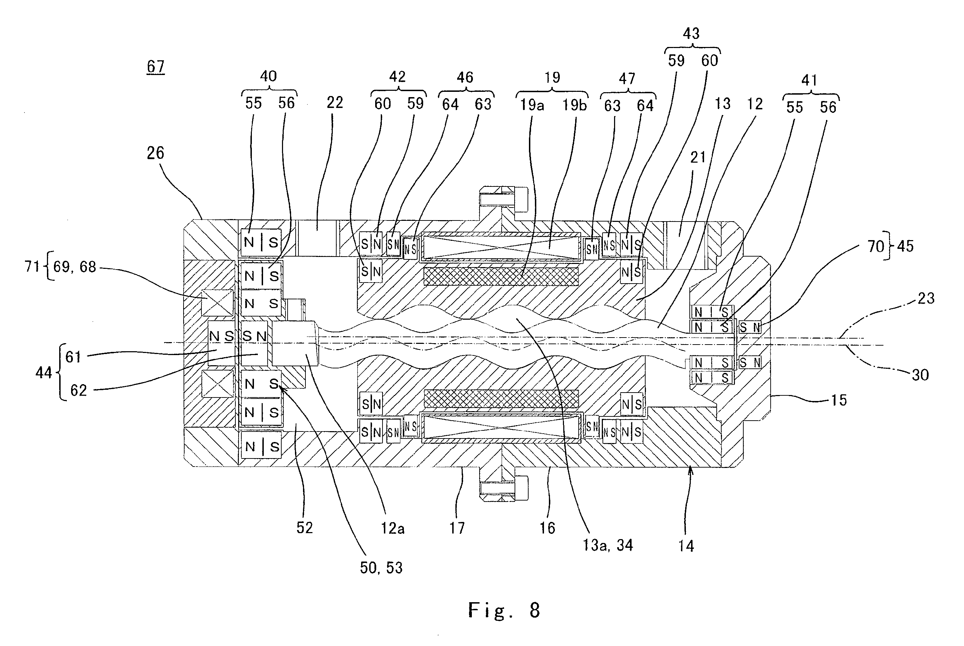

Next, a uniaxial eccentric screw pump 67 according to Embodiment 3 of the present invention will be explained in reference to Fig. 8. Differences between Embodiment 3 shown in Fig. 8 and Embodiment 2 shown in Fig. 6 are as follows. Embodiment 2 shown in Fig. 6 is configured such that the rotor driving portion 27 causes the driving magnetic pole portion 49 to rotate to cause the driven magnetic pole portion 50 and the rotor 12 to rotate in the same direction as the driving magnetic pole portion 49. In contrast, Embodiment 3 shown in Fig. 8 is configured such that: the rotor driving portion 27 and the driving magnetic pole portion 49 are omitted; a driving magnetic pole portion 69 including a plurality of fixed winding wires 68, such as eight fixed winding wires 68, is fixedly provided on the driving portion casing 26; the rotating magnetic fields N and S arranged alternatively are generated by these eight fixed winding wires 68; and the driven magnetic pole portion 50 and the rotor 12 are rotated by the rotating magnetic fields in the same direction as the rotating magnetic fields. These eight fixed winding wires 68 are arranged to correspond to the eight driving magnets 54, respectively, of the driving magnetic pole portion 49 of Embodiment 2. The iron core is attached to each of the eight fixed winding wires 68. The driving magnetic pole portion 69 and the driven magnetic pole portion 50 constitute a rotor driving portion 71.

With the above configuration, the driven magnetic pole portion 50 and the rotor 12 can be directly rotated by the rotating magnetic field generated by the driving magnetic pole portion 69. Therefore, it is possible to reduce transfer loss of the rotational force and comparatively reduce the volume of the uniaxial eccentric screw pump 67.

Moreover, Embodiment 2 shown in Fig. 6 is configured such that the second rotor driving portion 48 is provided at the tip end portion of the rotor 12, but Embodiment 3 shown in Fig. 8 is different from Embodiment 2 shown in Fig. 6 in that the second rotor driving portion 48 is omitted.

Further, Embodiment 2 shown in Fig. 6 is configured such that the repulsive force in the thrust direction is generated between the second magnet portion 62 having the short columnar shape provided at the center position of the end stud 15 and the first magnet portion 61 having the short columnar shape provided at the center position of the driven magnetic pole portion 57, but Embodiment 3 shown in Fig. 8 is different from Embodiment 2 shown in Fig. 6 in that the first magnet portion 61 is omitted such that the repulsive force in the thrust direction is generated between an annular second magnet portion 70 provided at the end stud 15 and the inner ring magnet portion 56 of the second magnetically-levitated bearing 41 provided at the tip end portion of the rotor 12.

The second magnet portion 70 and the inner ring magnet portion 56 are arranged to be spaced apart from each other in the thrust direction (direction along the central axis 30) such that magnetic poles thereof opposed to each other are the same poles (S and S, or N and N). Since the first magnet portion 61 can be omitted as above, it is possible to comparatively reduce the volume of the uniaxial eccentric screw pump 67. Other than the above, the uniaxial eccentric screw pump 67 of Embodiment 3 is the same as the uniaxial eccentric screw pump 37 of Embodiment 2 shown in Fig. 6, so that same reference numbers are used for the same components, and explanations thereof are omitted.

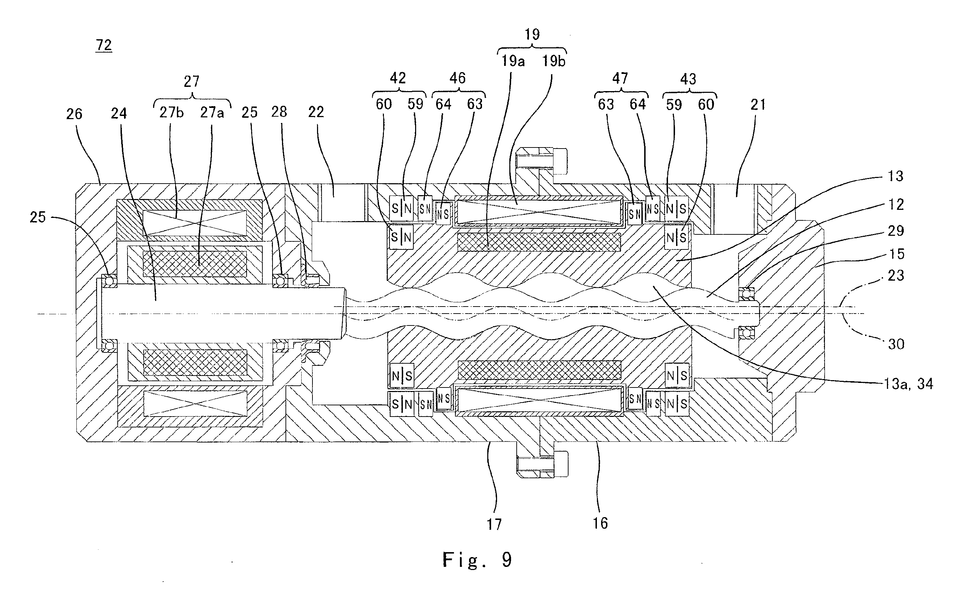

Next, a uniaxial eccentric screw pump 72 according to Embodiment 4 of the present invention will be explained in reference to Fig. 9. A difference between Embodiment 4 shown in Fig. 9 and Embodiment 1 shown in Fig. 1 is as follows. Embodiment 1 shown in Fig. 1 is configured such that the stator 13 is rotatably supported by the rolling bearings 18 applicable to the load in the radial direction and the thrust direction. In contrast, Embodiment 4 shown in Fig. 9 is configured such that the stator 13 is rotatably supported by the third and fourth magnetically-levitated bearings 42 and 43 applicable to the load in the radial direction and the third and fourth magnetic noncontact thrust bearings 46 and 47 applicable to the load in the thrust direction. Other than the above, the uniaxial eccentric screw pump 72 of Embodiment 4 is the same as the uniaxial eccentric screw pump 11 of Embodiment 1 shown in Fig. 1, so that same reference numbers are used for the same components, and explanations thereof are omitted. With this, it is possible to omit the contact type bearings 18 and the seal portions 20 for sealing the bearings 18. Further, it is possible to realize low noise and low vibration, and cause the stator 13 to smoothly rotate.

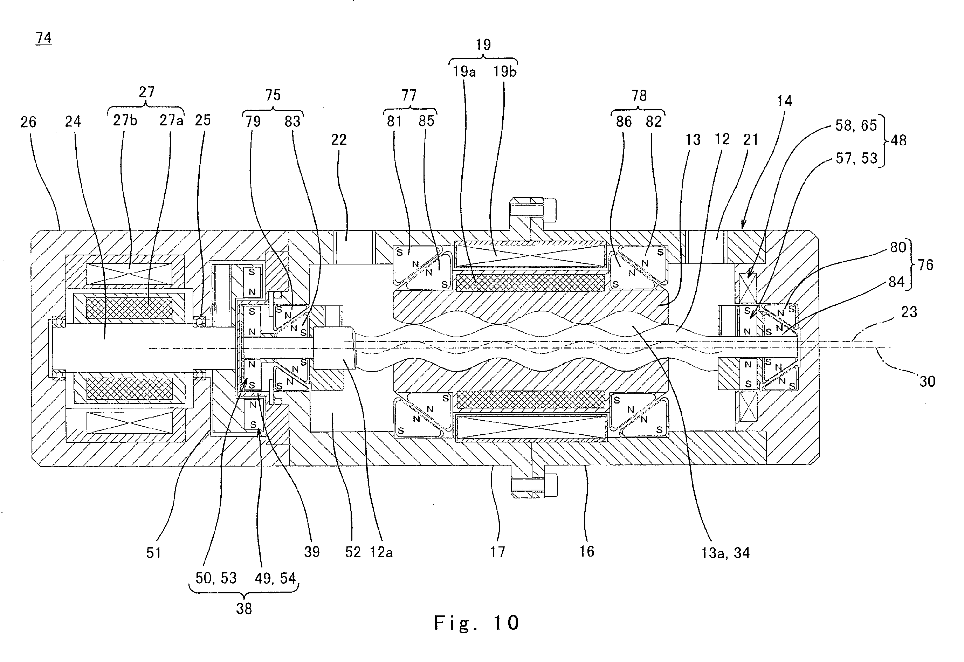

Next, a uniaxial eccentric screw pump 74 according to Embodiment 5 of the present invention will be explained in reference to Fig. 10. A difference between Embodiment 5 shown in Fig. 10 and Embodiment 2 shown in Fig. 6 is as follows. Embodiment 2 shown in Fig. 6 is configured such that the rotor 12 and the stator 13 are rotatably supported by the first to fourth magnetically-levitated bearings 40, 41, 42, and 43 and the first to fourth magnetic noncontact thrust bearings 44, 45, 46, and 47. In contrast, Embodiment 5 shown in Fig. 10 is configured such that the rotor 12 and the stator 13 are rotatably supported by magnetic noncontact bearings 75, 76, 77, and 78 capable of receiving both radial load and thrust load.

The magnetic noncontact bearings 75, 76, 77, and 78 are the same as one another, and include outer ring magnet portions 79, 80, 81, and 82, respectively, and inner ring magnet portions 83, 84, 85, and 86, respectively. Then, the outer ring magnet portion 79 and the like are provided at the pump casing 14 that is the fixing portion, and the inner ring magnet portion 83 and the like are provided at the rotor 12 and the stator 13 that are the rotating portions. Then, a surface of, for example, the outer ring magnet portion 79 and a surface of, for example, the inner ring magnet portion 83 which surfaces are repulsive to each other are formed as inclined surfaces inclined with respect to the central axis.

As above, the rotor 12 and the stator 13 are rotatably supported by the magnetic noncontact bearings 75 to 78 capable of receiving both the radial load and the thrust load. Therefore, as compared to the case of using the bearings capable of receiving the radial load and the bearings capable of receiving the thrust load, it is possible to simplify the configuration and comparatively reduce the volume of the uniaxial eccentric screw pump 74.

Then, Embodiment 5 shown in Fig. 10 is configured such that the driving magnetic pole portion 49 having the annular shape is provided outside the outer peripheral surface of the driven magnetic pole portion 50 to be spaced apart from the driven magnetic pole portion 50. With this, an axial length of the uniaxial eccentric screw pump 74 can be shortened. Other than the above, the uniaxial eccentric screw pump 74 of Embodiment 5 shown in Fig. 10 is the same as the uniaxial eccentric screw pump 37 of Embodiment 2 shown in Fig. 6, so that same reference numbers are used for the same components, and explanations thereof are omitted.

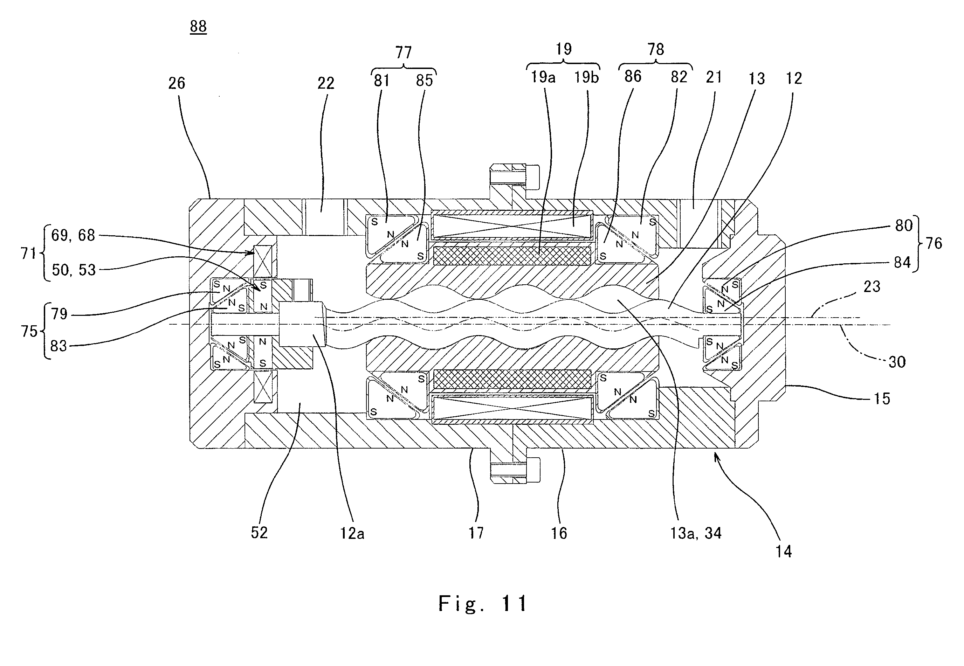

Next, a uniaxial eccentric screw pump 88 according to Embodiment 6 of the present invention will be explained in reference to Fig. 11. A difference between Embodiment 6 shown in Fig. 11 and Embodiment 3 shown in Fig. 8 is as follows. Embodiment 3 shown in Fig. 8 is configured such that the rotor 12 and the stator 13 are rotatably supported by the first to fourth magnetically-levitated bearings 40, 41, 42, and 43 and the first to fourth magnetic noncontact thrust bearings 44, 45,46, and 47. In contrast, Embodiment 6 shown in Fig. 11 is configured such that the rotor 12 and the stator 13 are rotatably supported by the magnetic noncontact bearings 75 to 78 capable of receiving both the radial load and the thrust load. These magnetic noncontact bearing 75 to 78 are the same as those in Embodiment 5 shown in Fig. 10.

With the above configuration, same functions and effects as Embodiment 5 shown in Fig. 10 are obtained, so that explanations thereof are omitted.

Then, Embodiment 6 shown in Fig. 11 is configured such that the driving magnetic pole portion 69 having the annular shape is provided outside the outer peripheral surface of the driven magnetic pole portion 50 to be spaced apart from the driven magnetic pole portion 50. With this, an axial length of the uniaxial eccentric screw pump 88 can be shortened. Other than the above, the uniaxial eccentric screw pump 88 of Embodiment 6 shown in Fig. 11 is the same as the uniaxial eccentric screw pump 67 of Embodiment 3 shown in Fig. 8, so that same reference numbers are used for the same components, and explanations thereof are omitted.

Each of Embodiment 2 shown in Fig. 6 and Embodiment 3 shown in Fig. 8 is configured such that the stator 13 is rotatably supported by the third and fourth magnetically-levitated bearings 42 and 43 applicable to the load in the radial direction and the third and fourth magnetic noncontact thrust bearings 46 and 47 applicable to the load in the thrust direction. Alternatively, although not shown, the stator 13 may be rotatably supported by the rolling bearings 18 applicable to both the load in the radial direction and the load in the thrust direction, as shown in Fig. 1.

Moreover, as shown in Fig. 1, Embodiment 1 is configured such that the tip end portion of the rotor 12 and the driving shaft 24 are rotatably supported by the bearings 29 and 25. Alternatively, the tip end portion of the rotor 12 may be a free end, and the driving shaft 24 of the rotor may be rotatably supported by the bearings 25.

Then, in Embodiments 1 to 6, the rotor 12 and the stator 13 are separately rotated with the outer peripheral surface of the rotor 12 and the inner peripheral surface of the inner hole 13a of the stator not contacting each other as shown in Figs. 3 to 5. Alternatively, the rotor 12 and the stator 13 may be separately rotated at a predetermined speed such that: one of parallel surfaces 35 of the inner hole 13a of the stator and the rotor 12 contact each other at an appropriate pressure; and the other one of the parallel surfaces 35 of the inner hole 13a of the stator and the rotor 12 do not contact each other. Even with this, the fluid can be transferred and filled while realizing high flow rate accuracy, low pulsation, and long life.

Moreover, as shown in Fig. 1 for example, Embodiments 1 to 6 are configured such that: the uniaxial eccentric screw pump 11 includes the rotor driving portion 27 and the stator driving portion 19, and these driving portions directly rotate the rotor 12 and the stator 13. Alternatively, although not shown, the rotor driving portion and the stator driving portion may be provided separately from the uniaxial eccentric screw pump 11, each of the driving portions may be coupled to the rotor 12 or the stator 13 by a joint for example to cause the rotor 12 or the stator 13 to rotate.

Further, in Embodiments 1 to 6, the stator 13 is made of engineering plastic, such as Teflon (trademark). However, the stator 13 may be made of synthetic rubber, a metal, or the like. Then, the rotor 12 is made of a metal, such as stainless steel, but may be made of engineering plastic, such as Teflon (trademark).

Further, in Embodiments 1 to 6, the rotor 12 and the stator 13 are formed to rotate such that the inner surface forming the inner hole 13a of the stator and the outer surface of the rotor 12 do not contact each other. Alternatively, the inner hole 13a of the stator and the rotor 12 may be formed to rotate such that the rotor 12 and both parallel surfaces 35 of the inner hole 13a of the stator contact each other by an appropriate pressure. Even with this, it is possible to prevent the rotor 12 and the stator 13 from significantly wearing away and prevent different sizes of wearing from being generated on respective surfaces. Therefore, the fluid can be transferred and filled while realizing high flow rate accuracy, low pulsation, and long life.

Then, as shown in Fig. 3 and the like, in Embodiments 1 to 6, the stator 13 has the double thread internal screw type inner hole 13a, the cross-sectional shape of the inner hole 13a is elliptical, the rotor 12 is the single thread external screw type, the cross-sectional shape of the rotor 12 is circular, the ratio of the pitch of the rotor 12 to the pitch of the inner hole 13a is 1 to 2, and the ratio of the rotating speed of the rotor 12 to the rotating speed of the stator 13 is 2 to 1. Alternatively, the stator 13 may have a triple thread internal screw type inner hole 13a, the cross-sectional shape of the inner hole 13a may be a substantially triangle shape each of whose three corner portions has a circular-arc shape, the rotor 12 may be a double thread external screw type, the cross-sectional shape of the rotor 12 may be substantially oval, the ratio of the pitch of the rotor 12 to the pitch of the inner hole 13a may be 2 to 3, and the ratio of the rotating speed of the rotor 12 to the rotating speed of the stator 13 may be 3 to 2. Even with this, the rotor 12 and the stator 13 are comparatively simple in shape, so that they can be formed with comparatively high size accuracy. Therefore, it is possible to provide the uniaxial eccentric screw pump 11 which has same functions and effects as the above embodiments, and realizes low-cost and quick delivery.

### Industrial Applicability

As above, a uniaxial eccentric screw pump according to the present invention has an excellent effect of being able to transfer and fill a fluid while realizing high flow rate accuracy, low pulsation, and long life. Thus, the present invention is suitable for the application to the uniaxial eccentric screw pump and the like.

## Claims

1. A uniaxial eccentric screw pump (74, 88) in which: an external screw type rotor (12) is inserted in an inner hole (13a) of an internal screw type stator (13); the rotor (12) and the stator (13) are separately, rotatably supported; and a rotation central axis (30) of the rotor (12) and a rotation central axis (23) of the stator (13) are arranged to be spaced apart from each other, wherein the rotor and the stator are separately rotated,
**characterized in that** one or both of the rotor (12) and the stator (13) is rotatably supported by a magnetic noncontact bearing (75, 77) capable of receiving both a radial load and a thrust load.

2. The uniaxial eccentric screw pump (74, 88) according to claim 1, wherein:
a central axis (30) of the rotor (12) and the rotation central axis (30) of the rotor (12) coincide with each other; and
a central axis (23) of the inner hole (13a) of the stator (13) and the rotation central axis (23) of the stator (13) coincide with each other.

3. The uniaxial eccentric screw pump (74, 88) according to claim 1 or 2, wherein:
the rotor (12) is rotatably supported by a driving shaft (24) provided at one end of the rotor (12), and the driving shaft (24) is rotated by a rotor driving portion (27);
a stator driving portion (19) is provided with respect to an outer peripheral surface of the stator (13), and the stator (13) is rotated by the stator driving portion (19); and
the stator (13) is hermetically stored in a pump casing (14), and the pump casing (14) includes a first opening (21) communicated with one opening of the inner hole (13a) of the stator (13) and a second opening (22) communicated with another opening of the inner hole (13a) of the stator (13).

4. The uniaxial eccentric screw pump (74, 88) according to claim 1, further comprising a magnetic pole type power transmission structure (38) configured to transfer to the rotor (12) a rotational force for causing the rotor (12) to rotate, wherein
the magnetic pole type power transmission structure (38) includes: a driving magnetic pole portion (49) configured to generate a plurality of driving magnetic poles; a driven magnetic pole portion (50) configured to generate a plurality of driven magnetic poles; and a dividing wall portion (39) configured to seal the driving magnetic pole portion (49) and the driven magnetic pole portion (50), the plurality of driving magnetic poles are arranged in a circumferential direction of the driving magnetic pole portion (49), the plurality of driven magnetic poles are arranged in a circumferential direction of the driven magnetic pole portion (50), and the driven magnetic pole portion (50) rotates by rotation of the plurality of driving magnetic poles.

5. The uniaxial eccentric screw pump (74, 88) according to claim 4, wherein: the plurality of driving magnetic poles and the plurality of driven magnetic poles are generated by magnets arranged such that a north pole and a south pole are alternately arranged; and the driving magnetic pole portion (49) is rotated by the rotor driving portion (27).

6. The uniaxial eccentric screw pump (74, 88) according to claim 4, wherein the plurality of driving magnetic poles are rotating magnetic fields generated by fixed winding wires, and the plurality of driven magnetic poles are generated by magnets arranged such that a north pole and a south pole are alternately arranged.

7. The uniaxial eccentric screw pump (74, 88) according to claim 1, wherein the rotor driving portion (27) causes the rotor (12) to rotate and the stator driving portion (19) causes the stator (13) to rotate with the rotor (12) and the stator (13) not contacting each other.

8. The uniaxial eccentric screw pump (74, 88) according to claim 1, wherein:
the stator (13) has a double thread internal screw type inner hole (13a) or a triple thread internal screw type inner hole (13a), and a cross-sectional shape of the inner hole (13a) is an elliptical shape or a substantially triangle shape each of whose three corners is a circular-arc shape;
the rotor (12) is a single thread external screw type or a double thread external screw type, and a cross-sectional shape of the rotor (12) is a circular shape or a substantially oval shape;
a ratio of a pitch of the rotor (12) to a pitch of the inner hole (13a) is 1 to 2 or 2 to 3; and
a ratio of a rotating speed of the rotor (12) to a rotating speed of the stator (13) is 2 to 1 or 3 to 2.

9. The uniaxial eccentric screw pump (74, 88) according to claim 1, wherein the stator (13) is made of engineering plastic, and the rotor (12) is made of a metal.

## Patentansprüche

1. Einachsige Exzenterschneckenpumpe (74, 88), in der ein Außenschrauben-Rotor (12) in einen inneren Hohlraum (13a) in einem Innenschrauben-Stator (13) eingebracht ist, der Rotor (12) und der Stator (13) getrennt drehbar gelagert sind, und eine zentrale Rotationsachse (30) des Rotors (12) und eine zentrale Rotationsachse (23) des Stators (13) räumlich getrennt voneinander angeordnet sind, wobei der Rotor und der Stator getrennt gedreht werden,
**dadurch gekennzeichnet, dass** der Rotor (12) und/oder der Stator (13) durch ein kontaktloses Magnetlager (75, 77) drehbar gelagert sind, welches sowohl eine radiale Last als auch eine Längs-Last aufnehmen kann.

2. Einachsige Exzenterschneckenpumpe (74, 88) nach Anspruch 1, wobei
eine Zentralachse (30) des Rotors (12) und die zentrale Rotationsachse (30) des Rotors (12) übereinstimmen, und
eine Zentralachse (23) des inneren Hohlraums (13a) des Stators (13) und die zentrale Rotationsachse (23) des Stators (13) übereinstimmen.

3. Einachsige Exzenterschneckenpumpe (74, 88) nach Anspruch 1 oder 2, wobei
der Rotor (12) durch eine am Ende des Rotors (12) vorgesehene Antriebswelle (24) drehbar gelagert ist und die Antriebswelle (24) durch eine Rotor-Antriebsvorrichtung (27) gedreht wird,
ein Stator-Antriebsteil (19) in Bezug auf eine Stator-Außenfläche (13) vorgesehen ist und der Stator (13) durch den Stator-Antriebsteil (19) gedreht wird, und
der Stator (13) hermetisch in einem Pumpengehäuse (14) untergebracht ist und das Pumpengehäuse (14) eine erste mit einer Öffnung des inneren Hohlraums (13a) des Stators (13) verbundene Öffnung (21) und eine zweite mit einer weiteren Öffnung des inneren Hohlraums (13a) des Stators (13) verbundene Öffnung (22) aufweist.

4. Einachsige Exzenterschneckenpumpe (74,88) nach Anspruch 1, die weiterhin eine Magnetpol-Energieübertragungsanordnung (38) zur Übertragung einer Rotationskraft auf den Rotor (12) zum Drehen des Rotors (12) aufweist, wobei
die Magnetpol-Energieübertragungsanordnung (38) ein Antriebs-Magnetpolteil (49) zur Erzeugung mehrerer Antriebs-Magnetpole, ein Betriebs-Magnetpolteil (50) zur Erzeugung mehrerer Betriebs-Magnetpole, und ein Trennwandteil (39) zum Abdichten des Antriebs-Magnetpolteils (49) und des Betriebs-Magnetpolteils (50) umfasst, wobei die mehreren Antriebs-Magnetpole in Umlaufrichtung um den Antriebs-Magnetpolteil (49) angeordnet sind, die mehreren Betriebs-Magnetpole in Umlaufrichtung um den Betriebs-Magnetpolteil (50) angeordnet sind und sich der Betriebs-Magnetpolteil (50) durch Rotation der mehreren Antriebs-Magnetpole dreht.

5. Einachsige Exzenterschneckenpumpe (74, 88) nach Anspruch 4, wobei die mehreren Antriebs-Magnetpole und die mehreren Betriebs-Magnetpole durch Magnete erzeugt werden, die so angeordnet sind, dass abwechselnd ein Nordpol und ein Südpol angeordnet sind, und der Antriebs-Magnetpolteil (49) durch die Rotor-Antriebsvorrichtung (27) gedreht wird.

6. Einachsige Exzenterschneckenpumpe (74, 88) nach Anspruch 4, wobei die mehreren Antriebs-Magnetpole rotierende Magnetfelder sind, die durch feste Windungsdrähte erzeugt werden, und wobei die mehreren Betriebs-Magnetpole durch Magnete erzeugt werden, die so angeordnet sind, dass abwechselnd ein Nordpol und ein Südpol angeordnet sind.

7. Einachsige Exzenterschneckenpumpe (74, 88) nach Anspruch 1, wobei die Rotor-Antriebsvorrichtung (27) den Rotor (12) zum Drehen bringt und der Stator-Antriebsteil (19) den Stator (13) zum Drehen bringt, wobei der Rotor (12) und der Stator (13) sich nicht berühren.

8. Einachsige Exzenterschneckenpumpe (74, 88) nach Anspruch 1, wobei
der Stator (13) einen Zweifach-Innengewinde-Hohlraum (13a) oder einen Dreifach-Innengewinde-Hohlraum (13a) aufweist und ein Querschnitt des inneren Hohlraums (13a) elliptisch oder im Wesentlichen dreieckförmig mit drei jeweils kreisbogenförmigen Eckteilen ist,
der Rotor (12) als Einfach-Außengewinde oder als Zweifach-Außengewinde ausgebildet ist und ein Querschnitt des Rotors kreisförmig oder im Wesentlichen ovalförmig ist,
ein Verhältnis zwischen einer Gewindesteigung des Rotors (12) und einer Gewindesteigung des inneren Hohlraums (13a) 1 zu 2 oder 2 zu 3 beträgt, und
ein Verhältnis zwischen einer Rotationsgeschwindigkeit des Rotors (12) und einer Rotationsgeschwindigkeit des Stators (13) 2 zu 1 oder 3 zu 2 beträgt.

9. Einachsige Exzenterschneckenpumpe (74, 88) nach Anspruch 1, wobei der Stator (13) aus technischem Kunststoff besteht und der Rotor (12) aus Metall besteht.

## Revendications

1. Pompe (74, 88) à vis excentrique uniaxiale dans laquelle: un rotor (12) en hélice externe est inséré dans un trou intérieur (13a) d'un stator (13) en hélice interne; le rotor (12) et le stator (13) sont guidés en rotation séparément; et un axe central (30) de rotation du rotor (12) et un axe central (23) de rotation du stator (13) sont disposés de façon à être écartés l'un de l'autre, le rotor et le stator étant mis en rotation séparément,
**caractérisée en ce que** le rotor (12) et / ou le stator (13) sont guidés en rotation par un palier magnétique (75, 77) sans contact capable de recevoir une charge radial et une charge de poussée.

2. Pompe (74, 88) à vis excentrique uniaxiale selon la revendication 1:
un axe central (30) du rotor (12) et l'axe central (30) de rotation du rotor (12) coïncidant entre eux; et
un axe central (23) du trou intérieur (13a) du stator (13) et l'axe central (23) de rotation du stator (13) coïncidant entre eux.

3. Pompe (74, 88) à vis excentrique uniaxiale selon la revendication 1 ou 2:
le rotor (12) étant guidé en rotation par un arbre moteur (24) placé à une extrémité du rotor (12), et l'arbre moteur (24) étant mis en rotation par une partie (27) d'entraînement de rotor;
une partie (19) d'entraînement de stator étant incorporée par rapport à une surface périphérique extérieure du stator (13), et le stator (13) étant mis en rotation par la partie (19) d'entraînement de stator; et
le stator (13) étant logé hermétiquement dans un carter (14) de pompe, et le carter (14) de pompe comprenant une première ouverture (21) mise en communication avec une ouverture du trou intérieur (13a) du stator (13) et une deuxième ouverture (22) mise en communication avec une autre ouverture du trou intérieur (13a) du stator (13).

4. Pompe (74, 88) à vis excentrique uniaxiale selon la revendication 1, comportant en outre une structure (38) de transmission de puissance à pôles magnétiques configurée pour transférer au rotor (12) une force de rotation afin de faire tourner le rotor (12),
la structure (38) de transmission de puissance à pôles magnétiques comprenant: une partie (49) de pôles magnétiques moteurs configurée pour générer une pluralité de pôles magnétiques moteurs; une partie (50) de pôles magnétiques récepteurs configuré pour générer une pluralité de pôles magnétiques récepteurs; et une partie (39) de cloison séparatrice configurée pour isoler la partie (49) de pôles magnétiques moteurs et la partie (50) de pôles magnétiques récepteurs, la pluralité de pôles magnétiques moteurs étant disposée dans une direction circonférentielle de la partie (49) de pôles magnétiques moteurs, la pluralité de pôles magnétiques récepteurs étant disposée dans une direction circonférentielle de la partie (50) de pôles magnétiques récepteurs et la partie (50) de pôles magnétiques récepteurs tournant par rotation de la pluralité de pôles magnétiques moteurs.

5. Pompe (74, 88) à vis excentrique uniaxiale selon la revendication 4: la pluralité de pôles magnétiques moteurs et la pluralité de pôles magnétiques récepteurs étant générées par des aimants disposés de telle façon qu'un pôle nord et un pôle sud soient disposés en alternance; et la partie (49) de pôles magnétiques moteurs étant mise en rotation par la partie (27) d'entraînement de rotor.

6. Pompe (74, 88) à vis excentrique uniaxiale selon la revendication 4, la pluralité de pôles magnétiques moteurs étant des champs magnétiques tournants générés par des fils d'enroulements fixes, et la pluralité de pôles magnétiques récepteurs étant généré par des aimants disposés de telle façon qu'un pôle nord et un pôle sud soient disposés en alternance.

7. Pompe (74, 88) à vis excentrique uniaxiale selon la revendication 1, la partie (27) d'entraînement de rotor faisant tourner le rotor (12) et la partie (19) d'entraînement de stator faisant tourner le stator (13), le rotor (12) et le stator (13) ne se touchant pas.

8. Pompe (74, 88) à vis excentrique uniaxiale selon la revendication 1:
le stator (13) comportant un trou intérieur (13a) en hélice interne à filet double ou un trou intérieur (13a) en hélice interne à filet triple, et la forme en section droite du trou intérieur (13a) étant une forme elliptique ou une forme sensiblement triangulaire dont chacun des trois sommets présente la forme d'un arc de cercle;
le rotor (12) étant une hélice externe à filet unique ou une hélice externe à filet double, et la forme en section droite du rotor (12) étant une forme circulaire ou une forme sensiblement ovale;
un rapport du pas de filetage du rotor (12) au pas de filetage du trou intérieur (13a) étant de 1 à 2 ou de 2 à 3; et
un rapport de la vitesse de rotation du rotor (12) à la vitesse de rotation du stator (13) étant de 2 à 1 ou de 3 à 2.

9. Pompe (74, 88) à vis excentrique uniaxiale selon la revendication 1, le stator (13) étant constitué de plastique technique et le rotor (12) étant constitué de métal.
